# EUROPEAN PATENT APPLICATION

(11) **EP 4 336 971 A1**
(43) Date of publication of application: **13.03.2024**
(21) Application number: 23195735.8
(22) Date of filing: 06.09.2023
(51) Int. Cl.: H05B 47/115, H05B 47/13, H05B 47/19

(54) **NETWORKED LIGHTING DEVICE**

(30) Priority: 06.09.2022 CH 10342022
(71) Applicant: LEDCity AG, 8004 Zürich (CH)
(72) Inventor: Gärtner-Wyniger, Florian, 8004 Zürich (CH); Bomholt, Björn, 8004 Zürich (CH)
(74) Representative: Rentsch Partner AG

(57) **Abstract**

A control module (22) for a lighting device includes a detector (221) configured to detect a person (3) in a vicinity of the lighting device, a wireless communication module (222) configured to transmit a detection message to a control module of a further lighting device, and to receive a further detection message from a control module of the further lighting device, the further detection message generated by the control module of the further lighting device upon detection of a further person, wherein the control module (22) is configured to: determine, using the further detection message, a distance between the particular further lighting device and the control module by comparing the stored location information with a location indicator contained in the further detection message, the location indicator indicative of an installed location of the further lighting device, determine whether the distance is below a pre-defined distance threshold, and generate one or more control signals for the lighting device configured to set the lighting module to a pre-determined light output level for a pre-determined duration, either upon detection of the presence of the person in the vicinity of the lighting device or upon determining that the distance is below the pre-defined distance threshold.

## Description

### FIELD OF THE DISCLOSURE

The present disclosure relates to a control module for a lighting device networked with other lighting devices.

### BACKGROUND OF THE DISCLOSURE

Lighting devices, for example for lighting up an office space or other area of a facility, have traditionally been operated by wall-mounted switches operable by a user. Depending on the particular space, room, or environment, the switch may be connected to a single lighting device or to a group of lighting devices.

To avoid unnecessary energy consumption and to increase the lifespan of lighting devices, there has been a gradual shift from the use of incandescent bulbs and fluorescent tubes to the use of light emitting diodes (LED). LEDs have the additional benefit that they can be more easily be configured to produce a warmer or colder and more pleasing light than fluorescent lighting. Additionally, lighting systems have begun to include various levels of automation, for example, through the use of time-based controllers that turn off the lights based on a time of day, a day of the week, or a duration since being switched on. Further developments include the use of motion detectors, which control the lights based on detected movement of people or vehicles, or controllers that dim the light based on ambient illuminance levels.

Retrofitting existing lighting systems in facilities with such sensors and controllers, however, is typically cumbersome, not only because additional hardware is necessary in the form of sensors and controllers, but also because additional wiring is typically necessary between the lighting system, the sensors and the controllers, which results in a resource intensive retrofit.

Networked lighting systems are known in which each individual lighting device is controllable via a wired network, however these often require a central controller to control a group of lighting fixtures. The individual lighting devices often require, in addition to a power connection, a separate data connection for the wired network. The individual lighting devices are configured to response to commands from the central controller, for example on and off, dim to a particular level, etc.

In addition, lighting systems are known in which lighting devices are divided into groups of lighting devices, such that every lighting device in a particular group can be controlled simultaneously. The groups, however, are typically configured manually during commissioning of the lighting system and, because each lighting device is fixedly assigned to a (single) group, only a limited number of lighting scenarios are possible.

### SUMMARY OF THE DISCLOSURE

It is an object of the invention and embodiments disclosed herein to provide a control module for a lighting device.

In particular it is an object of the invention and embodiments disclosed herein to provide a control module for a lighting device, a lighting device including the control module, and a lighting system, which do not have at least some of the disadvantages of the prior art.

The present disclosure relates to a control module for a lighting device. The control module includes a connector configured for direct wired connection with the lighting device, specifically a lighting module of a lighting device. The control module includes a detector configured to detect a person in a vicinity of the lighting device. The control module includes a wireless communication module configured to transmit a detection message to one or more control modules of one or more further lighting devices, the detection message indicating the presence of the person in the vicinity of the lighting device. The wireless communication module is configured to receive, from one of the control modules of one of the further lighting devices, a further detection message indicating a presence of a person in the vicinity of a particular further lighting device. The control module is configured to store location information indicative of an installed location of the control module. The control module is configured to determine, using the further detection message, a distance between the particular further lighting device and the control module by comparing the stored location information with a location indicator contained in the further detection message, the location indicator indicative of an installed location of the further lighting device. The control module is configured to determine whether the distance is below a pre-defined distance threshold. The control module is configured to generate one or more control signals for the lighting device, the control signals configured to set the lighting module to a pre-determined light output level for a pre-determined duration, either upon detection of the presence of the person in the vicinity of the lighting device or upon determining that the distance is below the pre-defined distance threshold, or both.

In an embodiment, the wireless communication module is configured for de-centralized communication with the further control modules of the further lighting devices using a routed wireless network, in particular including synchronizing and scheduling radio frequency channel access with the further control modules of the further lighting devices for collision-free communication.

In an embodiment, the control module further comprises a multi-spectral light sensor configured to receive light generated by the lighting module of the lighting device, and to generate a light sensor signal indicative of a light output level and a color temperature of the lighting module.

In an embodiment, the control module is further configured to generate the control signal for the lighting module of the lighting device using the light sensor signal.

In an embodiment, the pre-determined light output level includes a pre-determined level of luminous flux and a pre-determined color temperature.

In an embodiment, the control module further comprises a near-field communication circuit configured to receive, from a near-field communication device, configuration parameters.

In an embodiment, the near-field communication circuit is further configured to transmit, to a near-field communication device, the configuration parameters and/or diagnostic parameters.

In an embodiment, the control module is further configured to determine a time of flight of the further detection message between the further lighting device and the control module, and to determine the distance between the particular further lighting device and the control module by using the time of flight.

In an embodiment, the control module is further configured to generate the control signal to set the lighting module to a pre-determined dimmed light output level for a pre-determined dimming duration after the pre-determined duration has elapsed.

In an embodiment, the control module is further configured to generate a status message comprising status information and to transmit the status message to one or more further control modules of one or more further lighting devices and/or a gateway device.

In an embodiment, the control module is further configured to receive a control message from a gateway device via the one or more control modules of the one or more further lighting devices, the control message comprising configuration parameters.

In addition to a control module for a lighting device, the present disclosure also relates to a lighting device comprising a control module as disclosed herein.

In addition to a control module for a lighting device, and a lighting device itself, the present disclosure also relates to a lighting system comprising a plurality of lighting devices as disclosed herein.

In an embodiment, the lighting system further comprises a gateway device configured for wireless communication with the plurality of lighting devices and for communication with a server.

### BRIEF DESCRIPTION OF THE DRAWINGS

The above and other aspects, features and advantages of certain embodiments of the present disclosure will be more apparent from the following detailed description, taken in conjunction with the accompanying drawings, in which:
- Fig. 1: shows a block diagram illustrating schematically a control module for a light-ing device;
- Fig. 2: shows a block diagram illustrating schematically a lighting device including a control module and a lighting module;
- Fig. 3: shows a block diagram illustrating schematically a lighting system including a plurality of lighting devices;
- Fig. 4: shows a diagram illustrating a number of lighting devices and a person moving underneath them;
- Fig. 5: shows a diagram illustrating a plan view of an exemplary lighting system in which a lighting device has detected a person and the lighting system generated a light pool surrounding the person;
- Fig. 6: shows a block diagram illustrating two lighting devices exchanging messages;
- Fig. 7: shows a diagram illustrating a lighting device with an installed control module;
- Fig. 8: shows a perspective exploded view of a control module (left) and a perspective view of the assembled control module; and
- Fig. 9: shows a flow diagram illustrating an exemplary sequence of steps performed by a lighting device.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

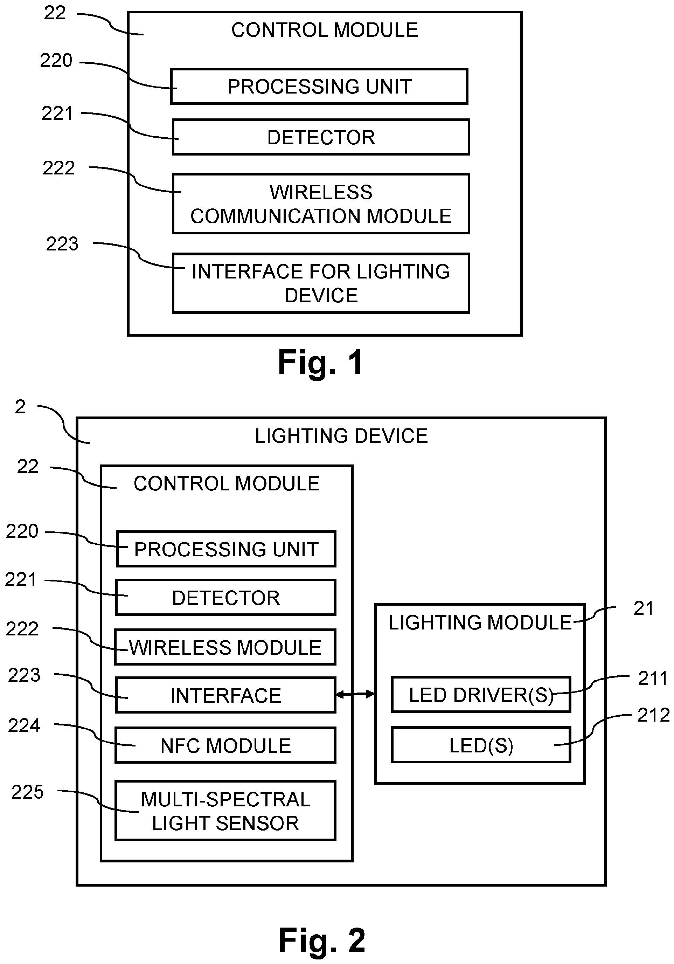

**Figure** 1 shows a block diagram illustrating schematically a control module 22. The control module 22 is an electronic device featuring several structural and/or functional components as described below. In an embodiment, the components are connected to one or more printed circuit boards (PCB) of the control module 22. Some components may be implemented as part of the PCB itself. Some components may be integrated with other components in a common unit (e.g., a common integrated circuit). In the case of the components being connected to more than one PCB, the PCBs are typically coupled using standard board interconnects, backplane connectors, card edge connectors, or wire-to-board connectors. In an embodiment, the control module 22 further includes a housing enclosing the components. The components may also be housed in a common housing shared with the lighting module 21. Depending on the embodiment, the control module 22 further includes input terminals and/or output terminals configured to receive and/or transmit power and/or data.

The control module 22 includes a detector 221 configured to detect an object, in particular a person 3 or vehicle, in a vicinity of the control module 22. Through the remainder of this disclosure, reference will be made to the detector 221 detecting the person 3, however the same considerations apply to other objects, in particular vehicles.

Depending on the configuration of the detector 221 and the particular arrangement of the control module 22, the vicinity can be within line of sight of the detector 221, within twenty-five meters of the detector 221, ten meters of the detector 221, within five meters of the detector 221, or within some other pre-defined range. In addition, the vicinity can be configured to be anisotropic, i.e. have a different distance in different directions. In particular, in scenarios in which the control module 22 is installed in a ceiling mounted lighting device 2 and the detector 221 is configured to face the floor underneath, the vicinity can be within a pre-defined distance of a point on the floor underneath the control module 22 or simply within line of sight of the detector 221.

The detector 221 can be configured to detect the presence and/or movement of the person 3.

The detector 221 can be configured to determine positional information. The positional information may include one or more distances, in particular between the detector 221 and the person 3. The detector 221 and/or the control module 2 may be further configured to determine positional information including a direction and/or speed of movement of the person 3, in particular by measuring a plurality of distances at a plurality of time-points. The detector 221 and/or the control module 22 may be configured to determine positional information including an extrapolated position of the person (i.e. a predicted position of the person 3 in the future), for example by using a current direction and/or a current speed of movement of the person 3. Under the assumption that the direction and/or speed of the movement will stay substantially constant (at least in the short-term future, e.g. within the next 3 seconds, preferably within the next 10 seconds), the detector 221 and/or the control module 22 may generate positional information including one or more positions of the person 3 in the future.

The detector 221 includes, for example, a radar detector. The radar detector can be configured to detect presence or movement of an object, e.g., of the person 3 and/or vehicle. The detector 221 can also include an infrared sensor, configured to detect a heat signature corresponding to the person 3, for example. The detector 221 can also include an optical sensor, configured to detect a change in an ambient light level, for example. The detector 221 is configured to generate a detection signal upon detection of the presence and/or movement of the person 3.

The detector 221 includes, for example, an ultra-wideband (UWB) detector. The UWB detector may be configured to detect presence or movement of an object, e.g., of the person 3 and/or vehicle. The UWB detector may further be configured to determine whether the object is a person 3, for example by detecting a physiological signal indicative of the object being a person 3, for example a breathing rhythm and/or a heart rate. The UWB detector may be configured to generate a detection signal only if the object is determined to be a person 3.

The control module 22 is designed to be installed in a lighting device 2 (not shown) and has, to this end, an interface 223 for directly connecting the control module 22 to the lighting device 2, in particular a lighting module 21 of the lighting device 2. The interface 223 enables data communication between the control module 22 and the lighting device 2. For example, the interface 223 provides a direct electrical coupling (i.e. galvanic contact) between the control module 22 and the lighting device 2. Alternatively, a capacitive, inductive, optical, or wireless coupling is used for data communication.

The data communication includes, in particular, the transmission of a control signal from the control module 22 to the lighting device 2, as is described below in more detail. The data communication can also include retrieving or receiving diagnostics data from the lighting device 2.

The interface 223 includes, for example, output terminals configured for coupling with input terminals of the lighting device 2.

Depending on the embodiment, the control module 22 further includes a connector for structurally connecting the control module 22 to the lighting device 2. The connector can be implemented, for example, as a removable plug connector, as a snap-fit non-removable connector, as a screw or bayonet-type connector, etc. Preferably, the connector and the interface 223 are designed such that structurally connecting the control module 22 to the lighting device 2 also establishes a data connection between the interface 223 and the lighting device 2.

In an embodiment, the interface 223 is further configured to receive power from the lighting device 2.

In an embodiment, the interface 223 is further configured to supply power to the lighting device 2. In this embodiment, the control module 22 may further include power electronics configured to provide suitable power for the lighting device 2.

In an embodiment, the interface 223 provides an interface according to the DALI (Digital Addressable Lighting Interface) protocol, as specified in the standard IEC 62386, including two wires that supply power as well as enabling data transmission.

In an embodiment, the interface includes two wires for supplying power in addition to one or more further wires for data transmission. The one or more further wires are configured to provide, for example, the control signal to one or more LED drivers 221 of the lighting module 21. The control signal is configured such that the lighting module 21 generates a particular light output. Depending on the particular lighting module 21, the particular light output can define a luminous flux, a percentage or proportion of a maximum output (i.e. a dimming level), a color (defined, for example, by a color temperature), or any other characteristic of the light output of the lighting module 21. Further, the control signal can also define a time period for the particular light output or further define a dynamic behavior of the light output (e.g., gradually changing from one color to another, gradually dimming, etc.). Depending on the embodiment, therefore, the control signal may have to be transmitted continuously, or transmitted only when events occur (e.g., the person 3 is detected, a detection message is received, a control message or other message is received, and/or a pre-defined time period elapses).

Depending on the embodiment, the control signal is implemented as an analog signal or as a digital signal. An example of an analog signal is a voltage level in a pre-defined range. An example of a digital signal is, for example, a DALI bus, a power wave modulated signal, or any other digital signal transported via a serial or parallel data bus.

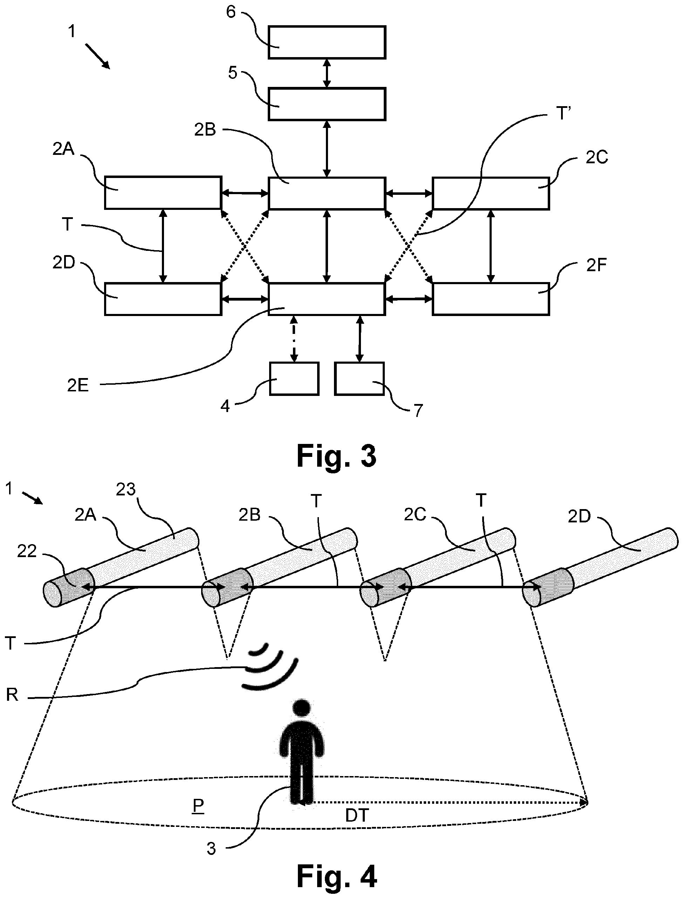

The control module 22 includes a wireless communication module 222. The wireless communication module 222 is configured for wireless data exchange with one or more further control modules (integrated into one or more further lighting devices 2, respectively). Optionally, the wireless communication module 222 is configured for wireless data exchange with a user control device 7 and/or a gateway device 5 (as shown in Figure 3). The wireless communication module 222 includes one or more antennas, one or more transceivers, along with other circuitry required for wireless radio communication. Preferably, the wireless communication module 222 is configured to implement a routed wireless mesh network.

The wireless communication module may be configured for wireless radio communication.

The wireless communication module 222 implements a network stack. The network stack includes, for example, a radio layer, a networking layer, and an application layer. The radio layer may include circuitry and/or functionality for radio communication using one or more wireless standards and/or protocols, for example, Bluetooth^{®} (in particular, Bluetooth Low Energy), ultra-wideband (UWB), WiFi (e.g. the IEEE 802.11 standards), IEEE 802.15.4, ETSI DECT-2020 NR 5G Standard, LoRa^{®}, sigfox, 5G NR, NB-loT, LTE-M, etc.

The network stack further includes one or more networking layers, which depend on the underlying implemented radio layer(s). The networking layers include, for example, Bluetooth Mesh Profile, Zigbee 3.0, Zigbee PRO, Thread, Wirepas^{®}, etc.

In addition to the radio layers and the networking layers, the network stack further includes one or more application layers. The particular application layers included depend on the underlying radio and networking layers and include, for example, Bluetooth Mesh, Wirepas^{®}, or Matter.

Depending on the embodiment, the network stack is implemented wholly in the wireless communication module 222, or partially in the wireless communication module 222 and partially in other components of the control module 22, for example in the processing unit 220 described in more detail below.

The control module 22 further includes a processing unit 220. The processing unit 220 is implemented, for example, as one or more electronic chips, for example one or more integrated circuits, microcontrollers, microprocessors, application specific circuits (ASICs), field programmable gate arrays (FPGAs), or the like.

The processing unit 220 is connected to the other components of the control module 22, in particular the detector 221 and the wireless communication module 222. Data connection is achieved, for example, by way of an I2C bus between the processing unit and the other components. In an embodiment, the wireless communication module 222 is integrated into the processing unit 220.

The processing unit 220 comprises a memory including volatile (non-persistent) and/or non-volatile (persistent) memory modules. For example, the memory is implemented as solid-state memory (e.g., flash memory). The memory is configured to store program code, firmware, software applications, software libraries, and data.

The data includes configuration parameters, such as location information indicative of an installed location of the control module 22 or the lighting device 2, and a distance threshold DT. These and other configuration parameters may be set during manufacture, commissioning, or maintenance of the control module 22.

The configuration parameters can also include illumination parameters which define one or more output illumination level, one or more output color of the lighting device 2, and/or one or more dimming duration. The illumination parameters can be structured in a sequence, such that a specific output illumination level, which is associated with a particular output color and dimming duration, is followed or preceded by another output illumination level, itself associated with an output color and dimming duration. In such a manner, the illumination parameters define a sequence of lighting scenarios through which the lighting device 2 proceeds after coming out of a stand-by state in which the lighting module does not emit light The data stored in the memory may also include log data related to recorded values from sensors (in particular the detector 221), messages transmitted and/or received using the wireless communication module 222, operating parameters of the control module 22, and operating parameters of the lighting device 2 (in particular the lighting module 21) connected to the control module 22.

The processing unit 220, and thereby the control module 22, is configured to carry out one or more steps and/or functions as described herein. Specifically, the memory is configured to store program code (for example, as firmware, software application(s), and/or software libraries) configured to control the processing unit 220 such that the control module 22 carries out one or more of the steps and/or functions as described herein when the program code is executed. Depending on the embodiment, the steps and/or functions described herein may be performed solely by the processing unit 220, or they may be performed in conjunction with other components of the control module 22, in particular the detector 221 and/or the wireless communications circuit 222.

The control module 22 further includes a power supply input configured to receive electrical energy for operation of the various components of the control module 22. The power supply input can be integrated, for example, with the interface 223 for the lighting device, such that the control module 22 receives electrical energy from the lighting device 2. Alternatively, the power supply input can be directly connected to a mains power of the facility in which the control module 22 is installed.

Depending on the embodiment, the control module 22 can include further components, as described with reference to Figure 2.

**Figure** 2 shows a lighting device 2 including the lighting module 21 and the control module 22. Depending on the embodiment, the lighting device 2 is manufactured having an installed control module 22 as well as the lighting module 21, or manufactured such that the control module 22 is installable subsequent to manufacture. Additionally, depending on the embodiment, the lighting module 21 and/or the control module 22 are exchangeable, such that if either the lighting module 21 and/or the control module 22 require repair or replacement, they can be uninstalled and a new lighting module 21 and/or control module 22 can be installed.

The lighting module 21 includes one or more light emitting diode (LED) drivers 211 and one or more LEDs 212. The LED driver(s) 211 is an electronic component that regulates power to the LEDs 212.

The LEDs 212 are configured to generate a light output having one or more colors. The output color can include one or more wavelengths of light, e.g., including a single output color, a color mixture defined by a combination of one or more wavelengths, and/or a color mixture defined by a color temperature. Depending on the embodiment, the LEDs 212 include LEDs 212 that generate one or more different colors. Additionally, or alternatively, the LEDs 212 can include color filters, fluorescent components and/or phosphorescent components designed to produce a pre-determined light output defined, for example, by a color temperature.

The LED driver(s) 211 is configured to receive a control signal from the control module 22 that controls a light output of the lighting module 21. The control signal includes, for example, a dimming signal (implemented using, for example, an analog or PWM signal) and is used by the LED driver(s) 211 to set a dimming level of the LEDs 212. The control signal can further include a color signal configured to set or alter an output color of the LEDs 212.

In an embodiment, the LED driver(s) 211 is configured to automatically compensate for a change in the light output of the LEDs 212 due to aging, by increasing the light output for a given control signal over time according to a pre-defined output degradation relation. Additionally, the LED driver(s) 211 can be configured to automatically compensate for a change in the light color of the LEDs 212 due to aging, by altering the light output of one or more LEDs 212 of the plurality of LEDs 212 according to a pre-defined color degradation relation.

Additionally, and/or alternatively, the control module 22 is configured to automatically compensate for a change in the light output of the LEDs 212 due to aging as described above, in particular using the diagnostic parameters received from the LED driver(s) 211. Automatic compensation as described above is also foreseen.

In an embodiment, the LED driver(s) 211 is further configured to transmit a status signal to the control module 22. The status signal received from the LED driver(s) 211 can be indicative of a current state of the lighting module 21, for instance a current light output. The status signal can also be indicative of any aging or malfunctioning of the LED driver(s) 211 and/or the LEDs 212.

In an embodiment, the control module 22 further includes a near-field communications (NFC) module 224 connected to the processing unit. The NFC module 224 is preferably configured for passive operation, i.e. the power required to run the NFC module 224 is received from an (interrogating) device equipped with an NFC reader (for example, a tool device 4 as shown in Fig. 3). The NFC module 224 is configured to receive one or more configuration parameters from the NFC reader and to store the configuration parameters in a non-volatile memory configured to be read by the control module 22 (in particular, the processing unit 220 of the control module 22). The configuration parameters include, in particular, the location information and the distance threshold DT. The NFC module 224 can further be configured to transmit data stored in the non-volatile memory to the NFC reader including, for example, monitoring parameters and/or diagnostic parameters. The monitoring parameters indicate, for example, a number of operating hours of the control module 22 and/or the lighting module 21, a level of degradation of the lighting module 21 (in particular, the LED driver(s) 211 and/or the LEDs 212). The diagnostic parameters include, for example, warning, fault, and/or maintenance messages generated by the control module 22 or components thereof, or the lighting module 21 or the components thereof. The diagnostic parameters can further include a number of detection events (detected by the detector 221) or information related to the detection events.

In an embodiment, the control module 22 further includes a multi-spectral light sensor 225. The multi-spectral light sensor 225 is connected to the processing unit and is configured to measure a level of light in a plurality of channels (for example, in a red, green, and/or blue channel). The multi-spectral light sensor 225 is configured to provide a light sensor signal to the processing unit 220. The plurality of channels can also include a sunlight channel (e.g., a white channel), and/or an infrared (IR) channel.

To measure incident light, the multi-spectral light sensor 225 includes, for example, a plurality of photodiodes. Depending on the embodiment, there may be color filters arranged in front of the photodiodes according to the color bands the respective photodiodes are designed to measure, or wavelength selective photodiodes may be used.

For example, the multi-spectral light sensor 225 is configured to measure a light output of the LEDs 212 of the lighting module 21. To this end, the multi-spectral light sensor 225 is designed such that a part of the light output of the LEDs 212 is incident on the multi-spectral light sensor 225. Depending on the embodiment, an optical path (such as provided by a transparent or translucent polycarbonate or an optical fiber) may be arranged between the LEDS 212 and the multi-spectral light sensor 225 to guide light from the LEDS 212 onto the multi-spectral light sensor 225. The multi-spectral light sensor 225 is configured to generate and transmit the light sensor signal to the processing unit 220 of the control module 22. Thereby, the control module 22 receives a direct measurement of a light output level of the LEDs 212 as well as a direct measurement of a color temperature of the LEDs 212. The control module 22 is configured to generate the control signal for the lighting module 21 depending on the light sensor signal, in particular to compensate for a degradation of the LEDs 212 due to aging, which can result in a change of light output and/or color temperature over time.

In an embodiment, the multi-spectral light sensor 225 is arranged in the lighting module 21 instead of in the control module 22, and the light sensor signal is transmitted from the multi-spectral light sensor 225 to the control module 22 via the interface 223.

Additionally, or alternatively, the multi-spectral light sensor 225 is configured to measure light received from the environment (ambient light) and to generate and transmit to the control module 22 (via the interface 223) the light sensor signal depending on the measured ambient light. Thereby, the control module 22, in particular the processing unit 220, receives information relating to an ambient light level and/or an ambient color temperature of the environment (which may include a light output generated by the lighting device 2 itself). The control module 22 is configured to generate the control signal depending on the light sensor signal. Thereby, for example, an appropriate light output level optionally including an appropriate light output color is generated by the lighting device 2 according to the ambient light level, a time of day, or user preference. Preferably, the green channel of the multi-spectral light sensor 225 is used to measure the ambient light, as this corresponds to the wavelength range in which the humane eye is most sensitive.

More specifically, the control module 22 may be configured to generate the control signal such that the ambient light level as measured by the multi-spectral light sensor 225 satisfies one or more pre-defined ambient illuminance levels and/or pre-defined colors. The pre-defined ambient illuminance levels and/or pre-defined colors can be included in the configuration parameters set during manufacture, commissioning, or maintenance. The pre-defined ambient illuminance levels and/or pre-defined colors depend on the particular lighting scenario, environment, or application in which the control module 22 is installed.

The following table provides some examples of recommended illuminance levels for different lighting scenarios and is intended as a non-limiting example.

| **Lighting Scenario** | **Illuminance Level (Lux)** |
|---|---|
| Undercover Carpark | 70 |
| Warehouse | 100 |
| Corridors/Stair Wells | 100 |
| Toilets | 150 |
| Entrance Halls | 200 |
| Computer Work Stations | 400 |
| Laboratory | 750 |
| Tool and die-making | 1200 |

Depending on the embodiment, the pre-defined ambient illuminance levels can be specified using the specific target luminous Lux, or specified using an identifier or descriptor linked to a particular light output level stored in the lighting module 21. The pre-defined illuminance levels can be specified to correspond to illuminance levels seen by a user, in particular at a reference height in a room, using for example a one or two point calibration using a lux-meter.

Similarly, each application can further specify a color temperature, defined, for example, by a descriptor such as warm light, neutral white light, bright white light, and/or cool white or their corresponding specific color temperatures (or color temperature ranges), which are 2700 K - 3500 K, 3500 K - 4500 K, 4500 K - 6000 K, and over 6000 K. In some examples, the control module 22 is configured to adapt the color temperature as indicated by the control signal such that depends on a time of day. For example, the color temperature correlates with an outdoor color temperature, such that the color temperature is warmer during evening hours than during midday hours. The following table provides some examples of recommended color temperatures for different lighting scenarios and is intended as a non-limiting example.

| **Lighting Scenario** | **Color Temp. (K)** |
|---|---|
| Bathroom | 3000 |
| Office Spaces | 3500 |
| Retail Stores | 3500 |
| Garages | 4100 |
| Warehouses | 5000 |
| Healthcare | 5000 |
| Indoor Agriculture | 6500 |

**Figure 3** shows a network map of a lighting system 1. A plurality of lighting devices 2A...2F are installed in a facility. The facility is, for example, an office space, a parking garage, an outdoor environment, or a home environment. Depending on the embodiment, the plurality of lighting devices 2A... 2F are limited to a single floor or extend across multiple floors.

The lighting devices 2A...2F may be installed in several different types of spaces within the same facility (e.g., parking garages, entryways, hallways, offices, meeting rooms, stairwells).

During commissioning of the lighting system 1, each lighting device 2A...2F has location information set, the location information being indicative of an installed location of the lighting device 2A...2F. The location information indicates, for example, an absolute and/or relative two-dimensional or three-dimensional installation location of the lighting device 2A...2F. The location information can further indicate one or more designators providing further information about the arrangement and installation of the lighting system 1 and the lighting devices 2A...2F thereof. The commissioning may take place by way of data received from the tool device 4, the user control device 7, and/or the gateway 5 (in particular in conjunction with the remote server 6). The data received during commissioning includes the configuration parameters, in particular the location information.

For example, the designators can include a space designator, the space designator indicating in which particular space the lighting device 2A...2F is installed (e.g. in which particular office, meeting room, stairwell, hallway, etc. the lighting device 2A...2F is installed). For example, all lighting devices 2A...2F installed in a particular office '15K' may have as a designator a space designator '15K'.

The location information can further indicate a floor designator, indicating on which building floor the lighting device 2A...2F is installed. For example, a lighting device 2A...2F installed on the 3rd floor of a building may have, as part of the location information, a floor designator '3').

The lighting devices 2A...2F that are installed in a common space, common floor, or common type of space, are configured, via the configuration parameters, such that they establish, between themselves, that they are installed in a common space as indicated by the location information.

This enables lighting scenarios (e.g., Lux and/or color) to be easily configured for all lighting devices 2A...2F sharing a common space. These lighting scenarios can be configured during commissioning of the lighting system 1.

Thereby, when the lighting devices 2A...2F receive detection messages from each other, the detection messages can readily be filtered such that only detection messages from lighting devices 2A...2F in the same space (e.g. having the same space designator and/or floor designator) are processed, and all others ignored.

In an embodiment, at least some of the lighting devices 2A... 2F are grouped into one or more lighting groups. Each lighting device 2A... 2F may be a member of no lighting group, of one lighting group, or of a plurality of lighting groups. Each lighting device 2A...2F which is a member of a particular lighting group stores, in the memory, a member lighting group designator of that particular lighting group, indicative of membership in that particular lighting group.

In an embodiment, at least some of the lighting devices 2A...2F are configured to target one or more lighting groups. Each lighting device 2A...2F may target no lighting group, one lighting groups, or a plurality of lighting groups. Each lighting device 2A...2F which triggers a particular lighting group stores, in the memory, a target lighting group designator of that particular lighting group indicating that the lighting device 2A...2F is configured to target that particular lighting group.

A lighting device 2A...2F does not need to be a member of a particular lighting group in order to target the particular lighting group. However, at least some lighting devices 2A... 2F may be both a member of a particular lighting group and also target the particular lighting group.

In an embodiment, a lighting device 2A...2F may store a plurality of member lighting group designators and/or a plurality of target lighting group designators.

The member lighting group designator(s) and the target lighting group designator(s) may be stored and/or managed in the memory in a variety of ways. For example, the member lighting group designator(s) and the target lighting group designator(s) may be included in separate lists or tables. Alternatively, the member lighting group designator(s) and the target lighting group designator(s) may be included in a more general list or table of lighting group designator(s), with each entry labelled or flagged to indicate whether it is a "member" entry or "target" entry.

The member lighting group designators may be included in the location information which is set during commissioning of the lighting system 1.

The target lighting group designators may be set during commissioning of the lighting system 1.

In an example, a lighting group may include a plurality of lighting devices 2A...2F in a particular space (e.g., a corridor, path, lane, walkway, hallway, staircase, lift, or entry-way). In another example, a lighting group may include a plurality of lighting devices 2A...2F which provide safety lighting and/or escape route lighting. In another example, a lighting group may include a plurality of lighting devices 2A...2F configured to illuminate an object of interest, for example a billboard, poster, or display.

The lighting system 1 is configured such that if a particular lighting device 2A...2F of a lighting group is turned on, all other members of that lighting group are also turned on.

For this to occur, the lighting devices 2A...2F may transmit one or more target lighting group designators, for example as part of a detection message. A receiving lighting device 2A...2F may check whether a received target lighting group designator includes a target lighting group designator matching a member lighting group designator stored in memory. In this way,

Additionally, in an embodiment, a lighting device 2A...2F which is not a member of a particular lighting group triggers that particular lighting group, more specifically lighting devices 2A...2F which are members of that particular lighting group, to turn on. In particular, a lighting device 2A...2F may store, in particular in a memory of the control module 22, one or more target lighting group designators. The lighting device 2A...2F may be configured to transmit the target lighting group designator, for example as part of a detection message, and any lighting device 2A...2F which receives the target lighting group designator and has a stored matching lighting group designator is configured to activate (i.e., turn on).

The provision of one or more lighting groups enables the lighting for particular situations or scenarios to be improved. For example, in a parking garage, a moving vehicle may cause a lane of light to be provided by a lighting group designed to illuminate the lane. A person 3 exiting the vehicle may cause a walkway to a staircase or lift to be illuminated in addition to a local zone surrounding the person 3.The lighting devices 2A...2F are configured to establish a routed wireless network between themselves through transmissions T. The routed wireless network is de-centralized in that there is no designated master lighting device 2A...2F (i.e. there is no lighting device 2A...2F which acts as a controlling node with authority over other nodes). The lighting devices 2A...2F are in particular configured to synchronize and schedule radio frequency channel access for collision-free communication. Thereby, a large number of lighting devices 2A...2F can be installed within communicative range of each other while maintaining high packet throughput and minimizing packet loss.

The routed wireless network is configured such that, should a particular connection connecting particular lighting devices 2A and the remaining lighting devices 2B...2F for transmissions T no longer be available, alternative connections for alternative transmissions T' are established such that the particular lighting devices 2A remains connected to the network. The routed wireless network has a tree-topology in which each node of the network has one parent node. However, broadcast messages, including the detection messages, are not necessarily required to propagate according to the tree-topology.

The routed wireless network including the lighting devices 2A...2F further optionally includes one or more gateway devices 5 and one or more control devices 7. The gateway device 5 is configured for wireless communication with the lighting devices 2A...2F. The gateway device 5 is further configured for network access, (e.g., Internet access), either directly or indirectly, for example via intermediary networks such as a local area network (LAN). The gateway device 5 is connected, (for example, via the internet), with a remote server 6. The remote server 6 could also be deployed on premises. The lighting system 1 can thereby transmit status information to the remote server 6, the status information relating to the functionality of the individual lighting devices 2, the gateway device(s) 5, and/or the control device(s) 7, for example.

The status information can indicate, for example, a number of installed lighting devices 2, a capacity utilization of the lighting system 1, a number of operating hours of individual lighting devices 2, a power consumption of the lighting system 1 (in particular, of the lighting devices 2), etc. The status information can further include information relating to malfunctioning lighting devices 2, lighting devices requiring repair or replacement, etc.

The lighting system 1 can also receive control messages from the remote server 6. The lighting system 1 can also be integrated into a building management system via the gateway, providing status information relating to the functionality of the lighting system 1, and receiving configuration parameters and/or control messages.

The lighting system 1 optionally further includes a tool device 4 configured for NFC communication with a lighting device 2E, as indicated by the dashed and dotted connection. Due to the near-field nature of NFC communications, the tool device 4 connects typically only to a single lighting device 2E at a time, however in some scenarios a parallel (or quasi-parallel) connection to multiple lighting devices 2E simultaneously is possible. The tool device 4 is configured to set configuration parameters in the lighting device 2E, including, for example, the location information. The configuration parameters can be set while the lighting device 2E is not powered, i.e., is not yet connected to the power mains of the facility. In an embodiment, the lighting device 2E is configured to receive configuration parameters during commissioning and to transmit, in a configuration parameters message, at least some of the received configuration parameters to further lighting devices 2A...2D, 2F. These configuration parameters include, in particular, location information, specifically the space designator and/or floor designator. The configuration parameters can additionally include one or more lighting scenarios, i.e., one or more flux settings and/or color temperature settings.

The control device 7 is configured for wireless data communication with the lighting system 1, in particular with the lighting devices 2A...2F via the routed wireless network. The control device 7 is, for example, a fixedly installed control device 7 (for example, wall-mounted control device), or a mobile communication device (for example, a hand-held remote or smart-phone). The control device 7 is configured to receive user input from a user (e.g., the person 3), for example using one or more user-operable operating elements, and to transmit control messages to the lighting devices 2A...2F based on the user input. The control device 7 thereby allows a person 3 to manually control the lighting system 1, in particular one or more individual lighting devices 2A...2F. The control device 7 could also be used to allow control by a third-party system (e.g., a Building management System).

The control device 7 may be configured such that only lighting devices 2A...2F within a particular distance, and/or a particular relative location, from the control device 7 are controlled (e.g., activated). The control device 7 may, additionally or alternatively, be associated with one or more lighting devices 2A...2F which are controlled by the control device 7.

The control device 7 may be configured to transmit, to the lighting system, a control message configured to control the lighting devices 2A...2F. The control device 7 may be configured to receive user input indicative of one or more of the following control signals: on, off, pre-defined light level, increase light level, or decrease light level. The "on" signal turns the lighting devices 2A...2F on, the "off" signal turns the lighting devices 2A...2F off, the pre-defined light level turns the lighting devices 2A...2F to a pre-defined light level, the "increase light level" increases the light output of the lighting devices 2A...2F (also known as a dimming level), and the "decrease light level" decreases the light output of the lighting devices 2A...2F.

In an embodiment, the lighting system 1 includes a plurality of control devices 7. The plurality of control devices 7 may be grouped into one or more logical control device groups. Each control device 7 of a particular control device group may have stored, in a memory of the control device 7, a control device group identifier. The control device group identifier may be set during commissioning of the lighting system 1.

Each control device group may have therewith associated one or more lighting devices 2A...2F. The lighting system 1, in particular the control devices 7 of a particular control device group, may be configured to synchronize with each other, for example by transmitting and/or receiving one or more status update messages. The status update messages may include the control device group identifier. A receiving control device 7 may check whether a received status update message includes a control device group identifier matching a stored control device group identifier. The status update message may include a control signal received at one of the control devices 7. Thereby, each control device 7 of the control device group may be synchronized with the others, for example it may display the current control setting according to the control signal.

In an example, a control message generated by a particular control device 7 is transmitted, via the wireless mesh network, to one or more further control devices 7 of the same control device group. The lighting devices 2A... 2F may be controlled by any of the control devices 7 of the control device group associated with the lighting devices 2A...2F. In particular, the lighting device 2A...2F are configured such that, of the plurality of control messages transmitted by the plurality of control devices 7, the most recent (e.g., a current) control message controls the behavior of the lighting devices 2A...2F. In effect, a new control message overrides any current behavior (in particular a light output level) of the lighting devices 2A...2F. The control devices 7 may therefore be configured such that they can override each other.Figure 4 shows a lighting system 1 including a row of tubular-shaped lighting devices 2A...2D installed in a row above a person 3. Each lighting device 2A...2F includes the control module 22 arranged adjacent to the lighting module 21. The lighting devices 2A...2F preferably have a form factor compatible with sockets and fixtures for fluorescent lamps, such that simple retrofitting is possible. The lighting devices 2A... 2F are preferably installed in such light fixture sockets in a ceiling of a room.

The lighting devices 2A...2F establish a routed wireless network, exchanging data via transmissions T between the control modules 22 of the lighting devices 2A...2F. Although transmissions only between nearest neighbor lighting devices 2A...2F are shown, other transmissions T are possible.

In the depicted scenario, the person 3 is initially situated underneath the lighting device 2B. The detector 221 of the control module 22 detects the person 3, preferably using a radar signal R, and, as is explained below in more detail, generates a detection message causing the control module 22 to switch the lighting device 2B on. Additionally, the lighting device 2B, in particular the control module 22 via the wireless communication module 222, sends a detection message to the remaining lighting devices 2A, 2C, 2D, which each switch on if a determined distance between a location of the lighting device 2A and their own location is less than a distance threshold DT. Thereby, the lighting devices 2A...2C generate a light pool P around the person 3 as depicted by the dashed lines. The lighting device 2D, however, remains turned off.

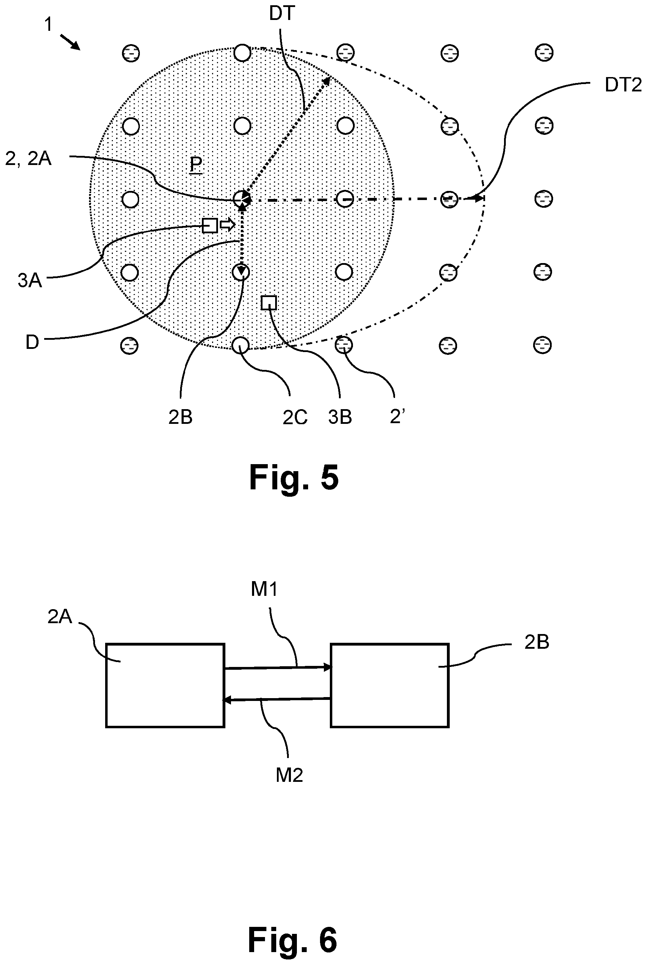

**Figure** 5 shows a top-down view of a lighting system 1 in which a plurality of lighting devices 2, 2' 2A, 2B, 2C, depicted as circular objects, are arranged in a grid. For the sake of greater clarity, not all of the lighting devices 2 are labelled with reference signs. A person 3A is shown as a square in a vicinity of the lighting device 2A. A second person 3B is shown in the vicinity of the lighting devices 2B, 2C.

The detector 221 of the lighting device 2A detects the person 3A in vicinity of the lighting device 2A. The lighting device 2A turns on and transmits a detection message across the routed wireless network. The detection message is received by further lighting devices 2B, 2C that also turn on, depending on their proximity to the lighting device 2A as well as other parameters as described herein. For example, further lighting devices 2B, 2C turn on if there are within the proximity distance DT from the lighting device 2A. Lighting devices 2' that have a distance D from the lighting device 2A further than the proximity distance DT remain turned off.

The lighting devices 2 are configured such that, after a given time-out period, the lighting device 2 turns off. The time-out period of a given lighting device 2A is reset if a detection message is received from another lighting device 2B, 2C within the distance threshold DT. Depending on the embodiment, the lighting devices 2 can be configured to have an intermediate pre-determined dimmed light output level to which they switch for a further pre-determined dimming duration, prior to turning off. For example, the lighting devices 2 initially turn on to 100% of their maximum flux. Then, after a pre-determined duration of 5 minutes, the lighting devices turn down to 20% of their maximum flux for 10 minutes, before turning off completely.

Thereby, as the person 3A moves around the space in which the lighting system 1 is installed, the light pool P formed by the lighting devices 2A extends in the direction in which the person 3A moves, gradually extinguishing behind the person 3A. The lighting devices 2 of the lighting system 1 thereby act as a swarm of lights, seamlessly turning on as the person 3 moves around the space to provide a customized lighting experience.

The lighting system 1 thereby does not have any specific pre-configured groups of lighting devices 2A...2C which act in common, i.e., all turning on simultaneously (or nearly simultaneously) and/or all turning off simultaneously. Rather, the lighting devices 2A...2C are autonomous of each other and are configured to set their light output based on the detection messages, in particular based on proximity to the lighting device 2 which detected the person 3. This results in a highly personalized lighting scenario for the person 3, which has the added benefit of providing significant energy savings.

In an embodiment, the detector of the 221 of the control module 22 is configured to determine positional information of the person 3A. The positional information relates to, for example, a relative position between the person 3A and the detector 221, the relative position indicated by a set of coordinates in a one dimensional, two dimensional, or three-dimensional coordinate system (e.g., a one-, two-, or three-dimensional Cartesian coordinate system, or a polar coordinate system). The set of coordinates thereby includes, for example, one or more distances between the person 3A and the detector 221 (the distances include, for example, a Euclidian distance, a vertical distance, and/or a horizontal distance in a longitudinal and transverse direction) and/or one or more angles between the person 3A and the detector 221 (the angles include, for example, a polar angle and/or an azimuthal angle).

In an embodiment, the detector 221 is configured to generate the detection message using the positional information. In particular, the detector 221 is configured to generate the detection message if the person 3A is within a predefined space. The predefined space is, for example, a circular or spherical space centered on the detector 221. The predefined space can, however, also be arranged off-center with respect to the detector 221 and can also have different shapes, such as an ellipsoid, a rectangle, etc.

In an embodiment, the detector 221 is configured to periodically (e.g., once every second) determine whether the person 3 is in the vicinity (or within the predefined space).

In an embodiment, the detector 221 (and/or the control module 22) is configured to determine detection characteristics of the detected object (e.g., the detected person or vehicle). These detection characteristics include a movement vector of the person 3A, for example as established using one or more detection measurements. As shown in the Figure by the block arrow, the person 3A is moving towards the right. For example, a radar detector 221 can use the Doppler Effect to determine a movement (preferably, the signal generated and transmitted by the detector 221 for detection purposes is a well-modulated signal), while another type of detector 221 may use two or more measured positions of the person 3A to determine the movement vector. The movement vector includes the direction of movement, and optionally a movement velocity and/or one or more distances between the detector 221 and the person 3A. Additionally, the detection characteristics can indicate a size of the person 3A (or other object) detected, as well as a type of object detected (e.g., whether a person or vehicle is detected). The detector 221 is configured to generate the detection signal to include the detection characteristics.

Additionally, or alternatively, the movement vector can be calculated by the control module 22 using detection messages received from the further lighting devices 2.The control module 22 can be configured to generate the detection message transmitted to the further lighting devices 2B, 2C to include the detection characteristics. Thereby, the further lighting devices 2B, 2C are enabled to control their light output based on the movement of the person 3A. In particular, those further lighting devices 2B, 2C which the person 3A is approaching turn on at a greater distance D from the person 3A. In effect, the distance threshold DT is and the lighting system 1 generates a pool of light P extending further in the direction that the person 3 is moving. In particular, the pool of light P extends to a second distance threshold DT2 in the direction of the movement of the person 3A, where the second distance threshold DT2 is greater than the (first) distance threshold DT.

In addition to the first person 3A, Figure 5 also depicts a second person 3B near the lighting device 2B. Upon detecting the person 3B, the lighting device 2B transmits a detection message to the lighting device 2A which also turns on because the lighting device 2B is within the distance threshold DT of the lighting device 2A.

**Figure 6** depicts a lighting device 2A transmitting a detection message M1 to a further lighting device 2B, and the further lighting device 2B transmitting a further detection message M2 to the lighting device 2B. Depending on the wireless network configuration, the lighting devices 2A and 2B are further configured to forward detection messages received from other lighting devices 2, depending on a set of stored routing rules.

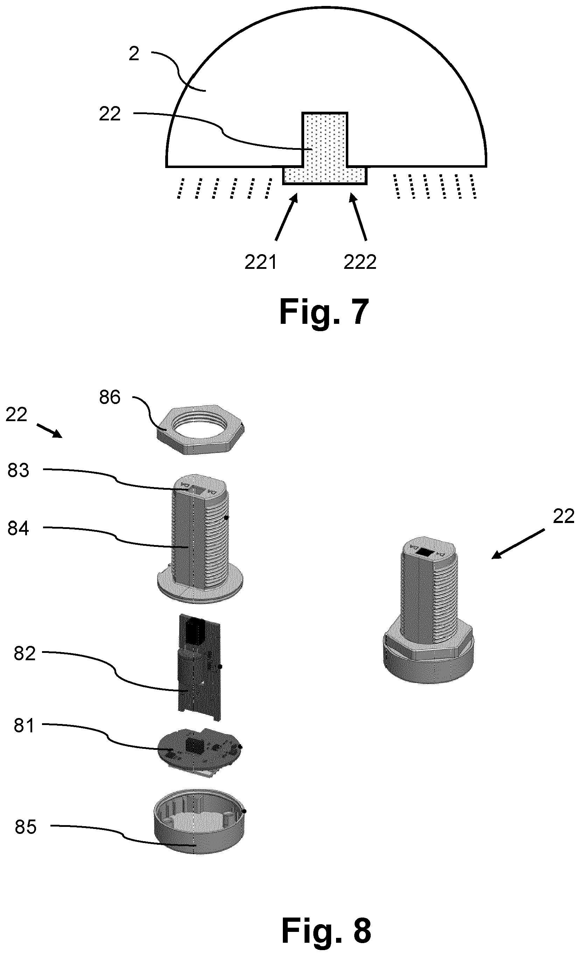

**Figure 7** shows a section view of an embodiment of a lighting device 2. The lighting device 2 is shaped in the form of a hemisphere, the control module 22 being installed underneath the lighting device 2 by way of a screw connection as shown in Figure 8. The lighting device 2 is configured to be installed in a raised position above the floor of a facility, for example as a hanging or standing lamp. The detector 221 is arranged on the bottom of the lighting device 2, outside the body of the lighting device 2, such that a person 3 (not shown) in a vicinity of the lighting device 2 is detected. Additionally, the wireless communication module 222 of the control module 22 is also arranged outside the body of the lighting device 2, such that wireless radio signals are transmitted and received without impediment.

In an embodiment where the multi-spectral light sensor 225 is configured to measure an ambient light level, the multi-spectral light sensor 225 is arranged outside the body of the lighting device 2.

**Figure 8** shows an exploded perspective view of components of one embodiment of the control module 22 on the left, in particular as designed for installation in a lighting device 2 as depicted in Figure 7. The fully assembled control module 22 is shown on the right. The control module 22 includes two printed circuit boards 81, 82 onto which the electronic components of the control module 22 as described herein are mounted. The first circuit board 81 includes, in particular, a downward facing detector 221 configured to detect the person 3 in a vicinity of the control module 22. The control module 22 further includes an interface 223 for a lighting device 2 implemented in the form of a socket 83. The interface 223 provides a two-wire DALI interface providing power for the control module 22, as well as for data transmission using a modulated signal.

The control module 22 has a housing including a substantially cylindrical main body 84 with a helical thread on the outside designed for a screw thread connection with a corresponding socket of the lighting device 2. The housing further includes an end cap 85 configured to cover the first circuit board and thereby, when fixed to the cylindrical main body 84, enclose the two circuit boards 81, 82. An additional nut 86 is included for securing the control module 22 to the lighting device 2.

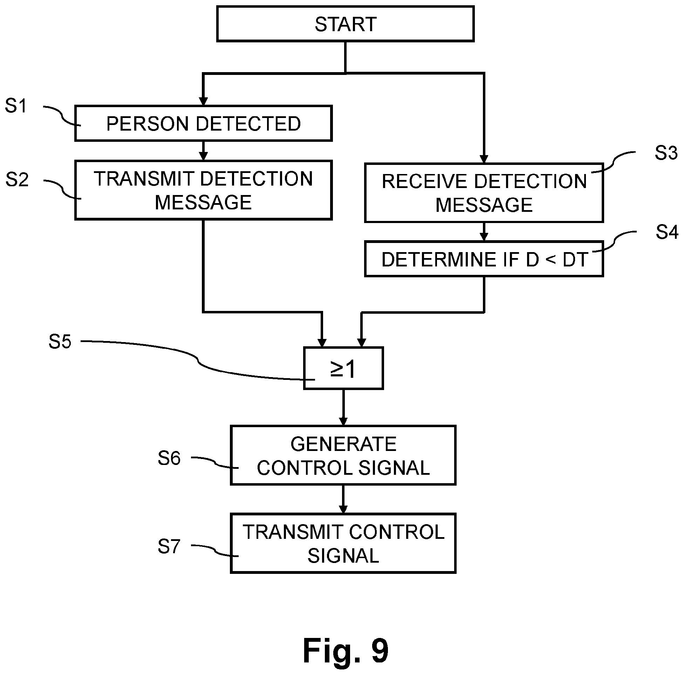

**Figure 9** shows a flow diagram illustrating a number of steps performed by the control module 22, in particular the processing unit 220. The steps are shown in a particular sequence, however at least some of the steps can also be performed in an alternative sequence.

In a step S1, an object, in particular a person 3 or vehicle is detected by the detector 221 of the control module 22. The detector 221 generates a detection signal indicative of the detection and transmits the signal to the control module 22, in particular to the processing unit 220.

Depending on the embodiment, the detection signal is not only indicative of presence, but is further indicative of one or more further characteristics as described herein.

In a step S2, the processing unit 220 is configured to transmit the detection message via the wireless communication module 222 to further lighting devices 2 over the wireless network. The detection message is configured to include the location information of the control module 22 and, optionally, the detection characteristics as described herein.

In an embodiment, the processing unit 220 is configured to include, in the detection message, one or more target lighting group designators, in particular the target lighting group designators stored in the memory. Thereby, the detection message is configured to activate the lighting devices of the one or more lighting groups indicated by the one or more target lighting group designators, respectively.

In a step S6, the processing unit 220 is configured to generate a control signal for the lighting device 2, in particular for the lighting module 21 of the lighting device 2. The control signal is configured such that the lighting module 2 of the lighting device generates a particular light output for a pre-determined period of time.

In a step S3, the processing unit 220 is configured to receive a further detection message, via the wireless communication module 222, from a control module 22 of a further lighting device 2. This occurs, for example, when the person 3 is detected within vicinity of the further lighting device 2 instead of, or in addition to, the (first) lighting device 2. This may also occur if another person 3 is detected within the vicinity of the further lighting device 2.

The further detection message is received via the routed wireless network and as such may be received directly from the further lighting device 2, or indirectly via one or more intermediary lighting devices 2. The further detection message includes location information indicative of an installed location of the further lighting device 2 as well as, optionally, detection characteristics.

In a step S4, the processing unit 220 is configured to determine a distance between the (first) lighting device 2 and the further lighting device 2. The distance D is determined by comparing the stored location information of the (first) lighting device 2 with the location information as contained in the received further detection message.

In an example where the location information includes an installation location expressed in two-dimensional or three-dimensional Cartesian coordinates, the distance is determined by computing a Euclidean distance between the installation locations.

Depending on the embodiment, the location information (as stored in the memory of the (first) lighting device 2A and as received as part of the detection message from the further lighting device 2B) can further include a space designator and/or a floor designator as described herein. The processing unit 220 is configured to determine whether both the location information as stored in the memory, and the location information as received from the further lighting device 2, match. This comprises, for example, determining, in the processing unit 220, whether both lighting devices 2A, 2B, are within the same space, within adjacent spaces, and/or within connected spaces, as defined by the respective space designators. Determining the match can also comprise determining, in the processing unit 220, whether both lighting devices 2A, 2B are on the same floor of a building.

The processing unit 220 is configured to proceed with determining the distance D only if a positive match is determined, for example.

In a step S4, the processing unit 220 is configured to determine whether the distance D is below the pre-defined distance threshold DT as stored in the memory. If the distance D is below the distance threshold DT, then the processing unit 220 is configured to generate the control signal as described with reference to step S6.

In an embodiment, the processing unit 220 is configured to determine whether the detection message includes, in particular includes in the location information received from the further lighting device 2B), a target lighting group designator matching a stored member lighting group designator. If the processing unit 220 determines an affirmative match of the received target lighting group designator and a member lighting group designator, the processing unit 220 is configured to generate the control signal as described with reference to step S6.

As shown in step S5, it is sufficient that one of the following conditions are met for the processing unit 220 to generate the control signal: that the control unit 22 detects the person 3, or that the control unit 22 receives from the further lighting device 2B within the distance threshold DT the detection message.

As described herein, the control signal controls the light output of the lighting module 21. The control signal may be a continuous signal, or one or more discrete signals.

In an embodiment, the control module 22, in particular the processing unit 220, is configured to receive one or more control messages from the NFC device 4, the control device 7, and/or the remote server 6 via the gateway 5. The control messages can be received via the routed wireless network or other communication channels. The processing unit 220 is configured to process the control messages and generate an appropriate control signal. The control messages can be configured to override particular settings as defined by the configuration parameters. The control messages can also be configured to contain configuration parameters.

In a step S7, the processing unit 220 is configured to transmit the control signal to the lighting module 21.

The above-described embodiments of the disclosure are exemplary and the person skilled in the art knows that at least some of the components and/or steps described in the embodiments above may be rearranged, omitted, or introduced into other embodiments without deviating from the scope of the present disclosure.

## Claims

1. A control module (22) for a lighting device (2, 2A), the control module (22) including:
a connector configured for direct wired connection with the lighting device (2, 2A),
a detector (221) configured to detect a person (3, 3A) in a vicinity of the lighting device (2, 2A), and
a wireless communication module (222) configured to transmit a detection message (M1) to a control module of a further lighting device (2B, 2C),
and to receive a further detection message (M2) from a control module of the further lighting device (2, 2B, 2C), the further detection message (M2) generated by the control module of the further lighting device (2, 2B, 2C) upon detection of a further person (3, 3B),
wherein the control module (22) is configured to:
store location information indicative of an installed location of the control module (22),
determine, using the further detection message (M2), a distance (D) between the particular further lighting device (2, 2B, 2C) and the control module (22) by comparing the stored location information with a location indicator contained in the further detection message (M2), the location indicator indicative of an installed location of the further lighting device (2, 2B, 2C),
determine whether the distance (D) is below a pre-defined distance threshold (DT), and
generate one or more control signals for the lighting device (2, 2A) configured to set the lighting module (21) to a pre-determined light output level for a pre-determined duration, either upon detection of the presence of the person (3A) in the vicinity of the lighting device (2A) or upon determining that the distance (D) is below the pre-defined distance threshold (DT).

2. The control module (22) of claim 1, wherein the wireless communication module (222) is configured for de-centralized communication with the further control modules of the further lighting devices (2, 2B, 2C) using a routed wireless network, in particular including synchronizing and scheduling radio frequency channel access with the further control modules of the further lighting devices (2, 2B, 2C) for collision-free communication.

3. The control module (22) of one of claims 1 or 2, further comprising a multi-spectral light sensor (225) configured to: receive light generated by the lighting module (21) of the lighting device (2, 2A), and to generate a light sensor signal indicative of a light output level and a color temperature of the lighting module (21).

4. The control module (22) of claim 3, wherein the control module (22) is further configured to generate the control signal for the lighting module (21) of the lighting device (2, 2A) using the light sensor signal.

5. The control module (22) of one of claims 1 to 4, wherein the pre-determined light output level includes a pre-determined level of luminous flux and a pre-determined color temperature.

6. The control module (22) of one of claims 1 to 5, further comprising a near-field communication circuit (224) configured to receive, from a near-field communication device (4), configuration parameters.

7. The control module (22) of claim 6, wherein the near-field communication circuit (224) is further configured to transmit, to a near-field communication device (4), the configuration parameters and/or diagnostic parameters.

8. The control module (22) of one of claims 1 to 7, wherein the control module (22) is further configured to determine a time of flight of the further detection message (M2) between the further lighting device (2B, 2C) and the control module (22), and to determine the distance (D) between the particular further lighting device (2B, 2C) and the control module (22) by using the time of flight.

9. The control module (22) of one of claims 1 to 8, further configured to generate the control signal to set the lighting module (21) to a pre-determined dimmed light output level for a pre-determined dimming duration after the pre-determined duration has elapsed.

10. The control module (22) of one of claims 1 to 9, wherein the control module (22) is further configured to generate a status message (M3) comprising status information and to transmit the status message (M3) to one or more further control modules of one or more further lighting devices (2, 2B, 2C).

11. The control module (22) of one of claims 1 to 10, wherein the control module (22) is further configured to receive a control message from a gateway device (5) via the one or more control modules of the one or more further lighting devices (2B, 2C), the control message comprising configuration parameters.

12. A lighting device (2A) comprising a control module (22) according to one of claims 1 to 11.

13. A lighting system (1) comprising a plurality of lighting devices (2, 2A, 2B, 2C) according to claim 12.

14. The lighting system (1) of claim 13, further comprising a gateway device (5) configured for wireless communication with the plurality of lighting devices (2, 2A, 2B, 2C) and for communication with a server (6).
